# EUROPEAN PATENT APPLICATION

(11) **EP 4 667 093 A1**
(43) Date of publication of application: **24.12.2025**
(21) Application number: 24020203.6
(22) Date of filing: 18.06.2024
(51) Int. Cl.: B01J 8/06, B01J 19/00, F27D 99/00

(54) **A FURNACE FOR PERFORMING A CHEMICAL PROCESS AND/OR FOR HEATING A PROCESS MEDIUM**

(71) Applicant: Selas-Linde GmbH, 82049 Pullach (DE)
(72) Inventor: Murer, Martin, 82049 Pullach (DE); Löwe, Lennard, 82049 Pullach (DE)
(74) Representative: Lu, Jing

(57) **Abstract**

The present invention relates to a furnace (300) for performing a chemical process and/or for heating a process medium comprising a process chamber (330), a number of tubes (340) and a number of burners (350), wherein the number of tubes (340) is provided in the process chamber (330) in two rows (341, 342), wherein a majority of the number of burners (350) is provided in the process chamber (330) according to a pattern such that each burner (350) of the majority of the number of burners is arranged in a first section (331) of the process chamber (330) between a middle axis (345) between the two rows (341, 342) of tubes (340) and a first row (341) of the two rows of tubes or in a second section (332) of the process chamber (330) between the middle axis (345) and a second row (342) of the two rows of tubes.

## Description

The present invention relates to a furnace for performing a chemical process and/or for heating a process medium as well as to a method for constructing such a furnace.

### Background of the invention

In a number of processes in the chemical industry, reactors or furnaces are used in which one or more reactants are passed through heated tubes where they are catalytically or non-catalytically reacted or heated up. The heating serves in particular to overcome the activation energy required for the chemical reaction taking place and, in the case of endothermic reactions, to provide the necessary energy for the chemical reaction. The reaction can proceed endothermically overall or, after overcoming the activation energy, exothermically.

Examples of such processes are steam cracking, various reforming processes, in particular steam reforming, dry reforming (carbon dioxide reforming), mixed reforming processes, processes for the dehydrogenation of alkanes and the like. In steam cracking, the tubes are guided through the reactor or furnace in the form of coils, which have at least one reverse bend in the furnace, whereas in steam reforming, tubes are typically used which run through the furnace without a reverse bend. The present invention may also be used in connection with so-called "millisecond" or "single-pass" reactors which are characterized by very low dwell times.

Further applications of the present invention are furnaces for performing a reverse water gas shift (RWGS) reaction of carbon dioxide and hydrogen to form carbon monoxide and water, dehydrogenation of oxygenates such as a reaction of methanol to formaldehyde and hydrogen, cleavage of ammonia to yield gaseous nitrogen and hydrogen, dehydrogenation of so-called liquid organic hydrogen carriers (LOHC) as known to the skilled person, and reforming of methanol and glycerol (as far as not already included by the term "reforming" used above).

The present invention is suitable for all embodiments of furnaces used for such processes as well as for furnaces for heating a process medium, for example for process gas heaters for direct reduced iron (DRI) applications. Purely by way of illustration, reference is made to the articles "Ethylene", "Gas Production" and "Propene" in Ullmann's Encyclopedia of Industrial Chemistry, for example the publications dated April 15, 2009, DOI: 10.1002/14356007.a10_045.pub2, December 15, 2006, DOI: 10.1002/14356007.a12_169.pub2, and June 15, 2000, DOI: 10.1002/14356007.a22_211.

The tubes of corresponding furnaces are conventionally heated using burners. The tubes are, for this purpose, guided through a combustion chamber or process chamber in which the burners are also arranged.

It is desirable to improve furnaces of that kind, in particularly such that an effective operation of the burners and an effective heating of the tubes by means of the burners is possible.

### Disclosure of the invention

The present invention relates to a furnace and to a method for constructing such a furnace with the features of the independent claims. Embodiments and advantages form the subject-matter of the dependent claims and of the subsequent description.

The furnace or process furnace is provided for performing a chemical process, i.e. a process for carrying out a chemical reaction, and/or for heating a process medium. The furnace can be provided for performing a steam cracking process, various reforming processes, in particular steam reforming, dry reforming (carbon dioxide reforming), mixed reforming processes, processes for the dehydrogenation of alkanes and the like. The furnace can particularly be a cracking furnace, e.g. a NH₃ cracking furnace, a reforming furnace, a process gas heater for direct reduced iron (DRI) applications etc.

The furnace comprises a process chamber or combustion chamber, a number of tubes and a number of burners. The number of tubes and the number or burners are at least partially provided in the process chamber. Particularly, at least a part of each tube and at least a part of each burner can project from an outside of the process chamber into the process chamber. The tubes can also be guided through the process chamber or through the furnace in the form of coils, which have at least one reverse bend in the process chamber or the furnace. The tubes are to be heated in the process chamber by means of the burners. Expediently, one or more reactants can be passed through the correspondingly heated tubes, where they are catalytically or non-catalytically reacted. It is also possible to pass a process medium to be heated through the correspondingly heated tubes. The burners can for example perform a partial oxidation process of a fuel comprising hydrocarbons, e.g. natural gas, residual oil, coal etc., using an oxidant or an oxygen-comprising fluid, e.g. air, pure oxygen or a mixture thereof.

The number of or reaction tubes (in the following generally "tubes") are provided in the process chamber in two rows. The tubes can be at least essentially parallel to each other, i.e. the main axes of the tubes can be at least essentially parallel to each other. Expediently, the two rows can be at least essentially parallel to each other, i.e. the main axes of each of the two rows can be at least essentially parallel to each other. Particularly, the main axes of each of the two rows can be at least essentially perpendicular to the main axes of each of the tubes. In each of the two rows, the corresponding tubes or the main axes of the corresponding tubes are expediently arranged in a straight line. A middle axis between the two rows of tubes, particularly between the main axes of the two rows, is at least essentially parallel to the main axes of each of the two rows.

A majority of the number of burners is provided in the process chamber according to a predetermined pattern such that each burner of the majority of burners is arranged in a first section of the process chamber between a middle axis between the two rows of tubes and a first row of the two rows of tubes or in a second section of the process chamber between the middle axis and a second row of the two rows of tubes.

Expediently, the main axis of each of the burners of the majority of burners is at least essentially parallel to the main axes of the tubes. Expediently, the various burners are arranged according to the pattern at specific positions, at specific distances to each other, and at specific distances to the tube rows when viewed from above, i.e. when viewed in a sectional top view through the number of tubes.

According to the pattern, the various burners of the majority of burners are not arranged in the middle or in the centre between the two rows of tubes. Instead, each of the majority of burners is arranged in a respective section of the process chamber between the middle of the two rows and one of the two rows. In particular, according to the pattern, the respective burners are arranged such that a main axis of each respective burner is arranged in the respective section of the process chamber. The pattern can e.g. a predetermined, regular pattern or also a random, irregular pattern. The corresponding pattern can expediently be individually and flexibly adjusted for the specific furnace design. It can expediently be determined for each of the majority of burners individually, whether the respective burner is arranged in the first section or in the second section. Further, the specific position in the respective section, in particular the distance toward the middle axis, can individually be determined for each burner. The burners can therefore individually and flexibly be arranged for a specific furnace design. The pattern can expediently be determined in order to allow an optimum operation of the respective burners as well as an optimum, effective heating of the tubes by means of the respective burners.

The term "majority of the number of burners" is particularly to be understood as more than 50% of the number of burners. Particularly, the majority of burners comprises more than 55% of the number of burners, further particularly more than 60%, further particularly more than 75%, further particularly more than 90%. Particularly, the majority can comprise all of the number of burners, i.e. all of the burners can be arranged accordingly at a respective predetermined distance larger than zero towards the middle axis.

The furnace can further comprise more than the above referenced number of burners, more than the above referenced tubes and more than two rows of tubes. The present invention particularly refers to the arrangement of the respective number of burners two rows of tubes. For example, the furnace can particularly comprise several pairs of tube rows with respective burners arranged between these tube row pairs with individual respective distances towards the respective middle axis between the corresponding tube rows. Furthermore, the furnace can also comprise e.g. a second number of burners arranged between a side wall of the furnace and an outermost row of tubes arranged neighbouring this respective furnace wall.

In conventional furnaces, burners are oftentimes provided in the middle or in the centre between two rows of tubes or close to a wall of the burner with a maximum distance from the tubes. Therefore, the burners are conventionally arranged in a straight line with an equal distance between each of the burners and the tubes and with an equal distance between the burners in this straight line. However, for large furnaces with multiple arrays or lines of burners, e.g. three or more lines of burners, problems can arise in the flow pattern of centre row burners in the middle between tube rows. Unlike for outer rows, there is no wall to stabilise the jet leaving the burner. Especially if the burner design does not match the available space between the tubes to form a stable recirculation zone (e.g. due to constructive constraints), unstable flow patterns can be formed resulting in several negative effects. For example, flame impingement on the tubes can be a very critical effect. Due to the instability of the formed flow pattern, a heat transfer can fluctuate due to fluctuating peak temperature and changing temperature profiles of the flames. This circumstance can affect a fuel control system, which might have to continuously adjust the firing capacity. This circumstance can also increase thermal NOx formation and thereby emissions. Due to entrainment of burner jets at the floor of the furnace, the centre of recirculation from non-wall burners can be lower than the furnace arch, even if there is an outlet directly above the burner. This circumstance can lead to an undefined flow pattern in an upper part of the furnace. A maximum height of the furnace can therefore be limited by the formed recirculation, even in a best-case scenario in which the recirculation might stabilise the main flow pattern in the furnace. A loss of burner momentum can therefore occur in central burners in the middle between tube rows, particularly in burners with highest exit velocities and highest mass flow rates, due to stable recirculation zones, resulting in an undefined flow distribution at the outlet into the convection zone. Depending on the burner spacing, in the space between the burners, flue gas can be entrained and can move in the direction of the jet, thereby blocking the path for recirculating flue gas. Minimum burner-to-burner-distances as defined in various standards, e.g. API 560, might not be possible to maintain in single centre row arrangements.

In contrast to that, according to the present invention, the majority of the burners is not aligning in the middle between the two tube rows in a straight line, but the majority of burners is shifted from the middle axis towards one of the tube rows. This arrangement of the respective burners especially increases a minimum distance between the respective burners and redistributes available space in a cross-section between the tubes to form a larger continuous free area, which particularly results in a better flame-stabilising recirculation pattern. Minimum distance requirements between the burners and the tubes from various standards, e.g. API 560, expediently allows an off-centre placement of the burners.

The distance between the respective burners can expediently be increased, thereby increasing the continuous cross-section not in-line with the burner jets, which particularly allows for increased recirculation rate of flue gases. More recirculation particularly yields a stable flame with less risk of impingement. Further, more recirculated flue gas especially leads to lower peak temperatures and more homogenous temperature distribution. This can especially lead to lower thermal NOx emission formation and a more homogenous heat flux to the tubes. Reduced peak heat flux can particularly decrease the tube wall temperature, which can reduce wall thickness due to lower design temperature and reduces coking rate.

The invention further relates to a method for constructing or manufacturing an embodiment of a furnace according to the present invention. Embodiments and advantages of the furnace and the method according to the present invention shall arise from the present description in an analogous manner.

In an embodiment, according to the pattern, each burner of the majority of the number of burners is arranged between the two rows of tubes a predetermined distance towards or away from the middle axis between the two rows of tubes. This predetermined distance especially corresponds to a distance between the main axis of the corresponding burner and the middle axis between the main axes of the two rows. The predetermined distance is larger than zero, i.e. the various burners of the majority of burners are not arranged in the middle or in the centre between the two rows of tubes. The distance toward the middle axis can expediently be determined for each of the majority of burners individually, such that the respective burners can individually and flexibly be arranged for a specific furnace design. The predetermined distance of each of the majority of burners can expediently be determined in order to allow an optimum operation of the respective burners as well as an optimum, effective heating of the tubes by means of the respective burners.

In an embodiment, according to the pattern, each of the majority of burners is further provided at a predetermined first tube distance towards or away from a first row of the two rows of tubes and at a predetermined second tube distance towards or away from a second row of the two rows of tubes. This first tube distance especially corresponds to a distance between the main axis of the corresponding burner and the main axis of the first row. This second tube distance especially corresponds to a distance between the central axis of the corresponding burner and the main axis of the second row. Particularly, each of the first and second tube distances is larger than zero. Furthermore, the first tube distance and the second tube distance for each respective burner are particularly different from each other. Particularly, the predetermined distance of each of the majority of burners towards the middle axis as well as the first and second tube distance of each of the majority of burners towards the two tube rows can individually be determined for each respective burner such that a pattern of the various burners relative to the tube rows and the middle axis can individually and flexibly be adjusted, especially in order to allow an optimum heating of the tubes and an optimum operation of the respective burners.

In an embodiment, according to the predetermined pattern, the individual burners of the majority of burners are arranged alternating in a direction parallel to the middle axis, i.e. in a direction perpendicular to the main axes of the tubes and parallel to the main axes of the rows, in the first section of the process chamber between the middle axis and the first row of the two rows of tubes and in the second section of the process chamber between the middle axis and the second row of the two rows of tubes. Therefore, the various burners of the majority of burners can be shifted from the middle axis to the left and right to form an alternating pattern. This alternating pattern can increase the minimum distance between the burners and can redistribute the available space in the cross-section between the tubes to form a larger continuous free area, which can result in a better flame-stabilising recirculation pattern.

In an embodiment, a first number of the majority of the number of burners is arranged according to the pattern consecutively in the direction parallel to the middle axis, i.e. in the direction perpendicular to the main axes of the tubes and parallel to the main axes of the rows, in the first section of the process chamber between the middle axis and the first row of the two rows of tubes. A second number of the majority of the number of burners is arranged according to the pattern consecutively in the direction parallel to the middle axis in the second section of the process chamber between the middle axis and the second row of the two rows of tubes. Instead of an alternating arrangement of the burners, several burners in a row can be placed on one side relative to the middle axis before the side is switched. Particularly, any number of burners can be grouped before the side is switched. The first number and second number of the majority of the burners can be identical or can differ from each other.

In an embodiment, according to the pattern, the majority of the number of burners, i.e. all of the majority of burners, is arranged either in the first section of the process chamber between the middle axis and the first row of the two rows of tubes or in the second section of the process chamber between the middle axis and the second row of the two rows of tubes. In this case, all of the majority of burners are arranged on one side of the middle axis, especially clearly shifted closer to one row of tubes. Particularly, the burners can be arranged closer to the cooler tubes.

In an embodiment, the individual burners of the majority of the number of burners, which are all arranged either in the first section or in the second section, are arranged with varying distances towards the middle axis between the two rows of tubes. Thus, each burner is arranged with a different distance toward the middle axis.

The specific pattern, in which the burners are arranged, can especially be determined based on the specific furnace design. As outlined further above, the furnace can especially comprise several pairs of tube rows with burners arranged between these tube row pairs. Particularly, the specific pattern of burner arrangement can individually be determined for each tube row pair.

In an embodiment, individual burners of the majority of the number of burners each comprise an individual firing capacity. For example, for several burners or for each burner in the pattern, a different, individual firing capacity can be predetermined, particularly such that an optimum burner operation and an optimum heating of the tubes can be achieved. Particularly, the individual firing capacities of the respective burners can be determined depending on an individual position of the respective burners in the furnace, particularly depending on the individual position within the pattern and/or relative to each other.

In an embodiment, the furnace comprises a number of side walls, a top wall, and a bottom wall, wherein these walls define the process chamber, particularly defining an interior volume of the furnace as the process chamber. The majority of the number of burners, expediently all of the burners, is provided in or at attached to the top wall and/or the bottom wall. The various burners can therefore be floor mounted burners or ceiling mounted burners. Each of the burners can at least partially project into the process chamber. Further, the main axes of the various tubes can be, at least essentially, parallel to the side walls of the furnace and/or, at least essentially, perpendicular to the top wall and the bottom wall.

In an embodiment, the distance for each burner of the majority of the number of burners towards the middle axis is determined by means of a computational fluid dynamics (CFD) analysis. Especially, the first and second tube distance of each burner towards the two tube rows can be determined by means of the CFD analysis. Expediently, the pattern, in which the majority of burners is arranged, can be determined by means of the CFD analysis. Computational fluid dynamics (CFD) utilises numerical analysis to simulate and analyse a fluid flow and to solve given problems. Interaction of the fluid flow with specific elements can e.g. be defined by boundary conditions. By means of this fluid flow analysis, flue gas produced by the various burners in the process chamber can particularly be simulated and evaluated. It can especially be evaluated how different patterns of burner arrangements influence flue gas flows in the process chamber. Thus, an optimum burner arrangement pattern can be determined, which allows an optimum burner operation and an optimum heating of the tubes.

In an embodiment, the distance for each burner of the majority of burners towards the middle axis is determined, especially by means of CFD analysis, in order to influence, particularly increase or improve, a flame-stabilizing recirculation pattern and/or a recirculation rate of flue gas and/or a flame stability in the process chamber. Alternatively or additionally, the distance is determined in order to influence, particularly to reduce, a peak temperature and/or to influence, particularly create a homogenous temperature distribution in the process chamber. Alternatively or additionally, the distance is determined in order to influence, particularly to reduce, thermal emission formation, especially thermal NOx emission formation, in the process chamber and/or in order to influence a heat flux to the number of tubes. An increased recirculation rate of flue gases can particularly yield a stable flame with less risk of impingement. More recirculated flue gas can especially lead to lower peak temperatures and more homogenous temperature distribution. This can particularly lead to lower thermal NOx emission formation and a more homogenous heat flux to the tubes. Reduced peak heat flux can decrease a tube wall temperature, which can reduce wall thickness due to lower design temperature and reduces coking rate.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows an embodiment of a furnace according to the present invention in a sectional side view.
- Fig. 2: schematically shows a furnace according to the prior art in a sectional top view.
- Fig. 3: schematically shows an embodiment of a furnace according to the present invention in a sectional top view.
- Fig. 4: schematically shows an embodiment of a furnace according to the present invention in a sectional top view.

### Detailed description of the drawing

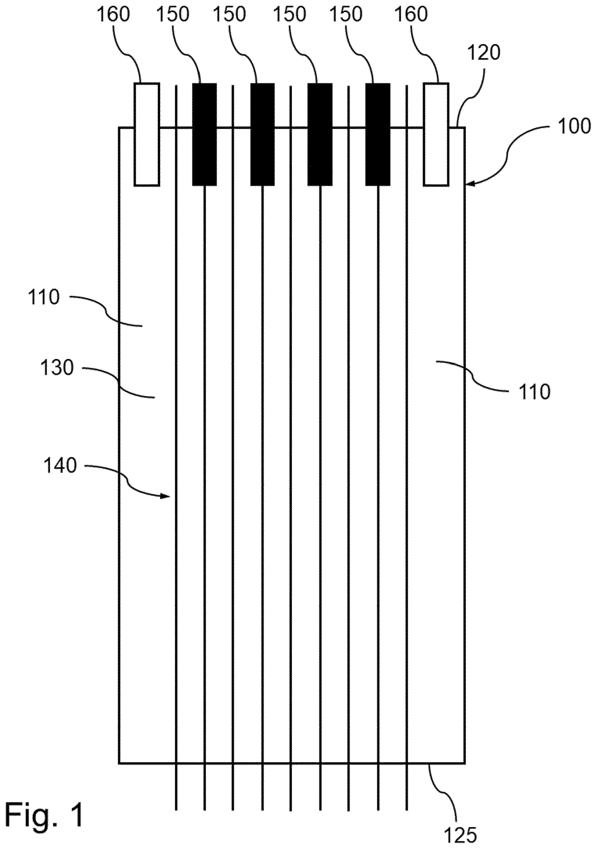

Fig. 1 shows an embodiment of a furnace 100 according to the present invention in a schematic sectional side view. The furnace 100 or process furnace is provided for performing a chemical process, e.g. a steam cracking process, a reforming process etc. The furnace 100 can also be provided for heating a process medium. For example, the furnace 100 can be provided as a cracking furnace, a reforming furnace, a process gas heater for direct reduced iron (DRI) applications etc.

The furnace 100 comprises several walls, which define and enclose an interior volume or process chamber 130. For example, the furnace can comprise four side walls 110, wherein only two of these side walls are shown in Fig. 1, as well as top wall 120 and a bottom wall 125.

A number of tubes or reaction tubes 140 are provided in the process chamber 130. The tubes 140 are provided parallel to each other, i.e. such that the main axes of the tubes 140 are parallel to each other. Further, the main axes of the tubes 140 are parallel to the side walls 110 and perpendicular to the top wall 120 and the bottom wall 125.

One or more reactants can be passed through these tubes 140, where they are catalytically or non-catalytically reacted. In order to overcome an activation energy of the corresponding chemical reaction, the tubes 140 shall be heated to a predetermined temperature. It is also possible to pass one or more process media to be heated thought the tubes140, wherein the tubes 140 are heated to a predetermined temperature.

For this purpose, a number of burners 150 is provided in the top wall 120, each burner 150 projecting at least partially into the process chamber 130. A main axis of each of the burners 150 is parallel to the main axes of the tubes 140. Each burner 150 can for example perform a partial oxidation process of a fuel comprising hydrocarbons, e.g. natural gas, residual oil, coal etc., using an oxidant or an oxygen-comprising fluid, e.g. air, pure oxygen or a mixture thereof.

Each burner of the number of burners 150 is arranged between two adjacent rows of the tubes 140. The furnace 100 can further comprise a second number of burners 160 arranged between the outermost tubes 140 and the respective side wall 110.

The present invention provides a specific manner regarding how to arrange the burners 150 relative to the tubes in order to allow an optimum operation of the burners 150 and an optimum heating of the tubes 140, as shall be explained hereafter.

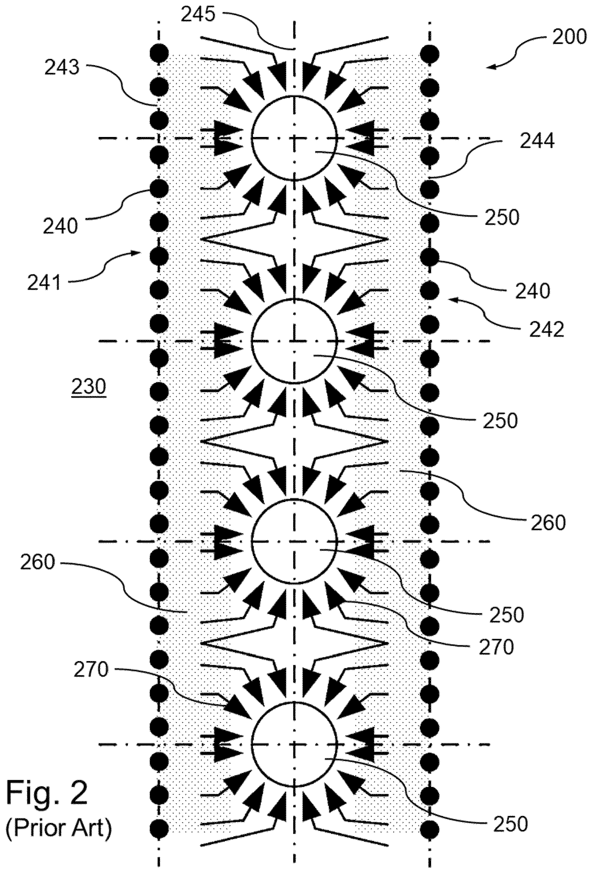

Fig. 2 schematically shows a furnace 200 according to the prior art in a sectional top view. In accordance with the furnace 100 of Fig. 1, the furnace 200 as shown in Fig. 2 comprises a number of tubes 240 and a number of burners 250 provided at least partially in a process chamber 230, wherein a main axis of each of the burners 250 is parallel to the main axes of the tubes 240.

The tubes 240 are provided in two rows 241 and 242, wherein these two rows 241, 242 are parallel to each other, i.e. wherein a main axis 243 of the first row 241 and a main axis 244 of the second row 242 are parallel to each other. In each of these rows 241, 242, the corresponding tubes 240 are arranged in a straight line. The main axes 243, 244 of each of the rows 241, 242 are perpendicular to the main axes of the tubes 240. A middle axis 245 between the two rows 241, 242 is parallel to the main axes 243, 244 of the rows 241, 242.

In the conventional furnace 200 according to the prior art, the burners 250 are provided in the middle or centre between the two tube rows 241, 242, i.e. such that the main axes of the burners 250, which are perpendicular to the drawing plane, intersect with the middle axis 245. The burners 250 are arranged in a straight line with an equal distance between each of the burners 250 and the tubes 240 and with an equal distance between the burners 250 themselves. Particularly, the main axes 243 and 244 of the burner rows 241, 242 have an equal distance to the axis 245, on which the burners 250 are arranged.

However, this arrangement of the burners 250 can yield an unstable, non-homogenous flow pattern of the burners 250. Since the jets leaving the burners 250 cannot be stabilised by the furnace walls and since no stable recirculation zone can be formed between the tubes 240 due to constructive constraints, unstable flow patterns can be formed. These unstable flow patterns can lead to flame impingement on the tubes, fluctuating heat transfer, fluctuating peak temperatures, and changing temperature profiles of the burner flames. This can negatively affect a fuel control system and increase thermal NOx formation and emissions.

Recirculation zones with recirculated flue gas flow in respect to the tubes 240 are schematically shown as dotted areas 260. The arrows 270 indicate flow entrainment by burner jets close to the mounting positions of the burners 250 in the middle between the two rows 241, 242 of the tubes 240.

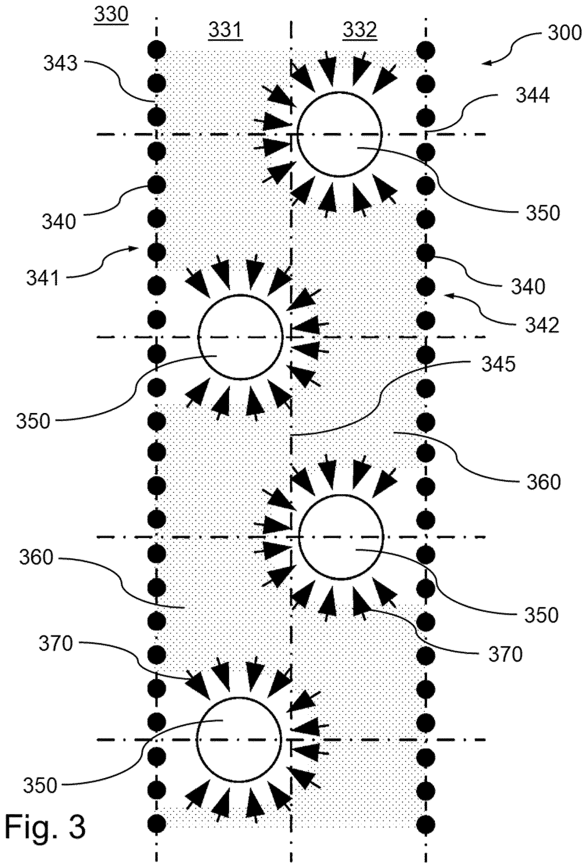

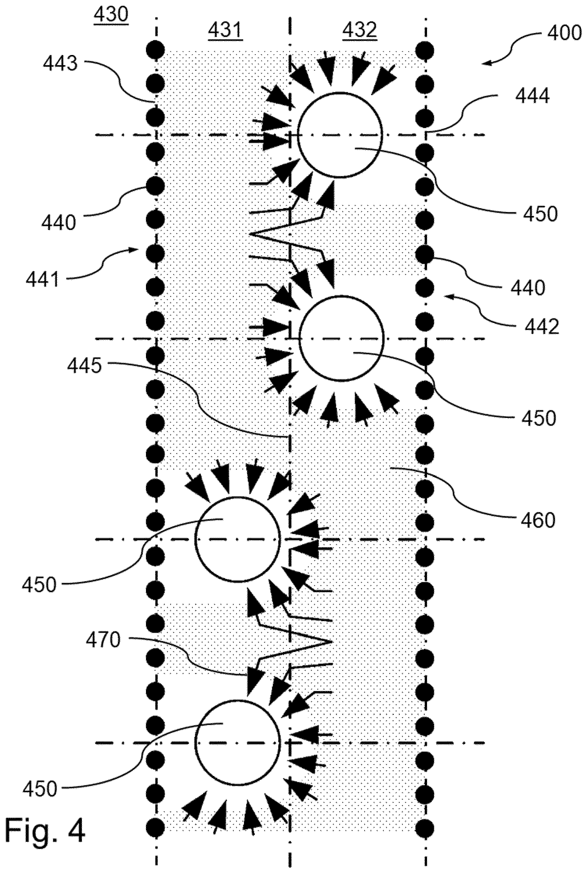

In contrast to this common arrangement of burners in the middle between tube rows, the present invention provides an improved arrangement of burners, as shall be explained hereafter with reference to Fig. 3 and Fig. 4.

Fig. 3 schematically shows an embodiment of a furnace 300 according to the present invention in a sectional top view. In accordance with the furnace 200 of Fig. 2, the furnace 300 comprises a number of tubes 340 and a number of burners 350 provided at least partially in a process chamber 330, wherein the tubes 340 are provided parallel to each other in two rows 341, 342, wherein the main axes 343, 344 of the rows 341, 342 are parallel to each other.

In contrast to the common furnace 200 of Fig. 2, according to an embodiment of the present invention, a majority of the burners 350, here all of the burners 350 of the furnace 300 are provided in a predetermined pattern such that each burner 350 is arranged between the two rows 341, 342 of tubes 340 at a predetermined distance towards the middle axis 345 between the two tube rows 341, 342, wherein this predetermined distance is larger than zero. The burners 350 are therefore not arranged in the middle between the tube rows 341, 342, but each burner 350 is arranged in a section of the process chamber between the middle axis 345 and one of the two rows 341, 342. The main axes of the burners 350, which are perpendicular to the drawing plane, do therefore not intersect with the middle axis 345. Further, according to the predetermined pattern, each burner 350 is provided at a predetermined first tube distance towards the first row 341 and at a predetermined second tube distance towards the second row 342, wherein these first and second tube distances particularly differ from each other for each burner 350.

As shown in Fig. 3, the burners 350 can be provided in an alternating pattern, wherein the individual burners 350 are arranged alternating in a direction parallel to the middle axis 345 in a first section 331 of the process chamber 330 between the middle axis 345 and the first row 341 and in a second section 332 of the process chamber 330 between the middle axis 345 and the second row 342.

As shown in Fig. 3, the burners 350 can be provided with regular first and second tube distances, e.g. such that every burner 350 arranged in the first section 331 is provided with an identical first burner distance towards the first row 341 and such that every burner 350 arranged in the second section 332 is provided with an identical second burner distance towards the second row 342. However, it is also possible that the first and second burner distances can vary for the individual burners.

The alternating burner arrangement pattern as shown in Fig. 3 increases the minimum distance between the burners 350 and redistributes the available space in the cross-section between the tubes 340 to form a larger continuous free area, which results in a better flame-stabilising recirculation pattern. In accordance with Fig. 2, recirculation zones with recirculated flue gas flow in respect to the tubes are shown in Fig. 3 as dotted areas 360. The arrows 370 indicate flow entrainment by the burner jet close to the mounting position of the burners 350.

Fig. 4 schematically shows an embodiment of a furnace 400 according to the present invention in a sectional top view. In accordance with the furnace 300 of Fig. 3, the furnace 400 comprises a number of tubes 440 and a number of burners 450 provided at least partially in a process chamber 430, wherein the tubes 440 are provided parallel to each other in two rows 441, 442 with the main axes 443, 444 of the rows 441, 442 parallel to each other. A middle axis 445 between the two rows 441, 442 is parallel to the main axes 443, 444 of the rows 441, 442.

As shown in Fig. 4, according to a predetermined pattern, a first number of a majority of the burners 450, here a first number of all the burners 450, is arranged consecutively in a direction parallel to the middle axis 445 in a first section 431 of the process chamber 430 between the middle axis 445 and the first row 441 of tubes. A second number of the majority of the burners 450, here a second number of all the burners 450, is arranged consecutively in the direction parallel to the middle axis 445 in a second section 432 of the process chamber 430 between the middle axis 445 and the second row 442 of tubes.

Therefore, several burners in a row are placed on one side of the middle axis 445, before the side is switched. Fig. 4 shows an example with groupings of two burners before the side is switched. However, any number of burners can be grouped before the side is switched. Even combining groupings with unequal size is possible. It is also possible that all of the burners 450 are arranged on one side of the middle axis 445, i.e. such that all of the burners 450 are either provided in the first section 431 or in the second section 332, particularly in the section with the cooler tubes.

In accordance with the alternating pattern shown in Fig. 3, the burner arrangement shown in Fig. 4 yields a better flame-stabilising recirculation pattern, thereby allowing an optimum burner operation and an optimum heating of the tubes 440. In accordance with Fig. 2 and Fig. 3, recirculation zones with recirculated flue gas flow in respect to the tubes are shown in Fig. 4 as dotted areas 460. The arrows 470 indicate flow entrainment by the burner jet close to the mounting position of the burners 450.

## Claims

1. A furnace (100, 300, 400) for performing a chemical process and/or for heating a process medium comprising a process chamber (130, 330, 430), a number of tubes (140, 340, 440) and a number of burners (150, 350, 450),
wherein the number of tubes (140, 340, 440) is provided in the process chamber (130, 330, 430) in two rows (341, 342, 441, 442),
wherein a majority of the number of burners (150, 350, 450) is provided in the process chamber (130, 330, 430) according to a pattern such that each burner (150, 350, 450) of the majority of the number of burners is arranged in a first section (331, 431) of the process chamber (130, 330, 430) between a middle axis (345, 445) between the two rows (341, 342, 441, 442) of tubes (140, 340, 440) and a first row (341, 441) of the two rows of tubes or in a second section (332, 432) of the process chamber (130, 330, 430) between the middle axis (345, 445) and a second row (342, 442) of the two rows of tubes.

2. The furnace according to claim 1, wherein, according to the pattern, each burner (150, 350, 450) of the majority of the number of burners is arranged between the two rows (341, 342, 441, 442) of tubes (140, 340, 440) at a predetermined distance towards the middle axis (345, 445) between the two rows (341, 342, 441, 442) of tubes (140, 340, 440), wherein the predetermined distance is larger than zero.

3. The furnace according to claim 1 or 2, wherein, according to the pattern, each burner (150, 350, 450) of the majority of the number of burners is provided at a predetermined first tube distance towards the first row (341, 441) of the two rows of tubes and at a predetermined second tube distance towards the second row (342, 442) of the two rows of tubes.

4. The furnace according to any one of the claims 1 to 3, wherein, according to the pattern, the individual burners (350) of the majority of the number of burners are arranged alternating in a direction parallel to the middle axis (345) in the first section (331) of the process chamber (330) between the middle axis (345) and the first row (341) of the two rows of tubes and in the second section (332) of the process chamber between the middle axis (345) and the second row (342) of the two rows of tubes.

5. The furnace according to any one of the claims 1 to 3, wherein, according to the pattern, a first number of the majority of the number of burners (450) is arranged consecutively in a direction parallel to the middle axis (445) in the first section (431) of the process chamber (430) between the middle axis (445) and the first row
(441) of the two rows of tubes, and a second number of the majority of the number of burners (450) is arranged consecutively in the direction parallel to the middle axis (445) in the second section (432) of the process chamber (430) between the middle axis (445) and the second row (442) of the two rows of tubes.

6. The furnace according to any one of the claims 1 to 3, wherein, according to the pattern, the majority of the number of burners is arranged either in the first section of the process chamber between the middle axis and the first row of the two rows of tubes or in the second section of the process chamber between the middle axis and the second row of the two rows of tubes.

7. The furnace according to claim 6, wherein the individual burners of the majority of the number of burners are arranged with varying distances towards the middle axis (345, 445) between the two rows (341, 342, 441, 442) of tubes (140, 340, 440).

8. The furnace according to any one of the preceding claims, wherein individual burners of the majority of the number of burners (150, 350, 450) each comprise an individual firing capacity, especially depending on an individual position of the respective burner in the furnace (100, 300, 400).

9. The furnace according to any one of the preceding claims, wherein the furnace (100, 300, 400) comprises a number of side walls (110), a top wall (120), and a bottom wall (125) defining the process chamber (130, 330, 430) of the furnace (100, 300, 400), wherein the majority of the number of burners (150, 350, 450) is provided in or attached to the top wall (120) and/or the bottom wall (125).

10. A method for constructing a furnace (100, 300, 400) according to any one of the preceding claims, comprising the steps of:
providing a number of tubes (140, 340, 440) in a process chamber (130, 330, 430) in two rows (341, 342, 441, 442); and
providing a majority of a number of burners (150, 350, 450) in the process chamber (130, 330, 430) according to a pattern such that each burner (150, 350, 450) of the majority of the number of burners is arranged in a first section (331, 431) of the process chamber (130, 330, 430) between a middle axis (345, 445) between the two rows (341, 342, 441, 442) of tubes (140, 340, 440) and a first row (341, 441) of the two rows of tubes or in a second section (332, 432) of the process chamber (130, 330, 430) between the middle axis (345, 445) and a second row (342, 442) of the two rows of tubes.

11. The method according to claim 10, further comprising the step of determining the distance for each burner of the majority of the number of burners towards the middle axis by means of a computational fluid dynamics analysis.

12. The method according to claim 10 or 11, further comprising the step of determining the distance for each burner of the majority of the number of burners towards the middle axis in order to:
influence a flame-stabilizing recirculation pattern in the process chamber (130, 330, 430); and/or
influence a recirculation rate of flue gas in the process chamber (130, 330, 430); and/or
influence a flame stability; and/or
influence a peak temperature in the process chamber (130, 330, 430); and/or
influence temperature distribution in the process chamber (130, 330, 430); and/or
influence thermal emission formation in the process chamber (130, 330, 430); and/or
influence a heat flux to the number of tubes (140, 340, 440).
